# EUROPEAN PATENT SPECIFICATION

(11) **EP 2 248 934 B1**
(45) Date of publication and mention of the grant of the patent: **16.05.2012**
(21) Application number: 10158009.0
(22) Date of filing: 26.03.2010
(51) Int. Cl.: D06F 13/06, D06F 17/10

(54) **Pulsator unit for washing machine and washing machine having the same**
Pulsatoreinheit für Waschmaschine und Waschmaschine damit
Unité de pulsateur pour machine à laver et machine à laver dotée de celle-ci

(30) Priority: 06.05.2009 KR 20090039410
(43) Date of publication of application: 10.11.2010
(73) Proprietor: Samsung Electronics Co., Ltd., Suwon-si Gyeonggi-do 442-742 (KR)
(72) Inventor: Seo, Dong Pil, Gyeonggi-do (KR); Park, Jae Ryong, Gyeonggi-do (KR); Pyo, Sang Yeon, Gyeonggi-do (KR)
(74) Representative: Clark, David James

(56) References cited:
- GB-A- 924 924
- US-A- 3 678 714
- US-A- 4 127 015
- US-A- 4 718 258
- US-A- 5 619 870
- US-A- 5 765 405
- US-A1- 2003 154 749
- US-A1- 2004 123 632

## Description

### BACKGROUND

### 1. Field

Embodiments of the present invention relate to a pulsator unit and to a washing machine having the same, which may generate rotating and vertical water streams simultaneously and prevent laundry from becoming lodged therein.

### 2. Description of the Related Art

Generally, a washing machine is an apparatus to separate contaminants from laundry by applying, e.g., shock energy to the laundry. Washing machines are classified, based on washing methods thereof, into drum type washing machines and pulsator type washing machines.

In a drum type washing machine, as a rotating tub is rotated while level with the ground, laundry placed in the rotating tub is washed by friction with an inner wall surface of a washtub or falling shock thereof in the process of being rotated together with water.

In a pulsator type washing machine, laundry is washed by a water stream generated as an upright rotating tub on the ground surface is rotated and a pulsator provided in the rotating tub is rotated.

The pulsator type washing machine includes, e.g., a housing defining an external appearance of the washing machine, a washtub fixedly installed in the housing in which water to wash laundry is stored, a rotating tub rotatably installed in the washtub and provided at the bottom thereof with a pulsator, and a drive device to drive the rotating tub and pulsator.

The washtub is suspended in the housing via suspension devices, and the drive device, which includes a motor and clutch, is mounted to the bottom of the washtub. The motor and clutch are located, respectively, at a lateral position and a center position of the bottom of the washtub. A shaft of the clutch is fitted through the centers of the rotating tub and pulsator. With this arrangement, the clutch functions to deliver power only to the pulsator during washing and rinsing strokes and to rotate the pulsator and rotating tub simultaneously during a dehydrating stroke.

The rotating tub rotatably disposed in the washtub is a cylindrical tub having an open upper side. Dehydrating holes are perforated throughout a wall of the rotating tub, enabling washing and dehydration of laundry received in the rotating tub.

The above-described washing machine, however, may cause serious damage to laundry and entanglement thereof as the pulsator is rotated forward and in reverse.

Further, washing laundry using a rotating water stream may increase the amount of water required to wash laundry.

Due to the fact that wet laundry is very heavy, furthermore, rotating the wet laundry for washing may impart considerably large loads to the motor.

The pulsator, may also cause laundry to be lodged between an outer end of the pulsator and a bottom surface of the rotating tub.

US5,765,405 describes an agitator for a clothes washer having a vertically reciprocating rod for preventing entanglement of clothes. The appended claims have been characterised based on this document. Other reciprocating arrangements are described in US5,619,870, US4,718,258 and US3,678,714. A washing machine with a wobbling device is described in US2003/154,749 and in US2004/123,632.

### SUMMARY

According to the present invention there is provided a pulsator unit and a washing machine as set forth in the appended claims. Other features of the invention will be apparent from the dependent claims, and the description which follows.

Therefore, it is an aspect of the present invention to provide a washing machine, which may generate rotating and vertical water streams simultaneously.

It is another aspect of the present invention to provide a washing machine having an improved configuration to prevent laundry from becoming lodged therein.

The foregoing and/or other aspects of the present invention may be achieved by providing a pulsator unit for a washing machine, used to generate wash water streams, including an outer pulsator to perform rotation, a rotating body coupled to the outer pulsator to perform rotation, and an inner pulsator received in the outer pulsator, the inner pulsator being coupled to the rotating body and is moved vertically by rotation of the rotating body to draw an arc path on the basis of a center point of the inner pulsator; wherein: the rotating body includes an inclined part having an upper inclined surface and a tilted rotating shaft protruding orthogonally relative to the inclined surface; and
the inner pulsator is coupled to the tilted rotating shaft so as not to be rotated by rotation of the tilted rotating shaft, the inner pulsator being moved vertically by rotation of the tilted rotating shaft and the inclined part.

An inner wall of the outer pulsator may include a curved surface shaped to come into close contact with the inner pulsator corresponding to vertical movement of the inner pulsator, to prevent laundry from becoming lodged between the outer pulsator and the inner pulsator.

A height of the inner wall of the outer pulsator may be at least equal to or greater than a height of an upper surface apex of the inner pulsator being moved vertically.

The curved surface may have a radius of curvature greater than a distance from a center point of the vertical movement of the inner pulsator to an outer end of the inner pulsator.

The outer pulsator may include a toothed portion to generate a rotating water stream.

The outer pulsator may include an embossed portion to generate a rotating water stream.

The rotating body may further include a coupling part integrally formed at the bottom of the inclined part, the coupling part being fixedly coupled to the outer pulsator.

The pulsator unit may be arranged to be received in a basket-bowl of the washing machine.

The foregoing and/or other aspects of the present invention may also be achieved by a washing machine comprising: a housing defining an external appearance of the washing machine; a rotating tub rotatably installed in the housing; and a pulsator unit according to claim 1 installed in a lower region of the rotating tub.

An inner wall of the outer pulsator may include a curved surface shaped to come into close contact with the inner pulsator corresponding to the vertical movement of the inner pulsator, to prevent laundry from becoming lodged between the outer pulsator and the inner pulsator.

A height of the inner wall of the outer pulsator may be at least equal to or greater than a height of an upper surface apex of the inner pulsator being moved vertically.

The curved surface may have a radius of curvature greater than a distance from a center point of the vertical movement of the inner pulsator to an outer end of the inner pulsator.

The outer pulsator may include a toothed portion to generate a rotating water stream.

The outer pulsator may include an embossed portion to generate a rotating water stream.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a longitudinal sectional view illustrating a configuration of a washing machine according to an embodiment of the present invention;
FIG. 2 is an exploded perspective view illustrating an outer pulsator, rotating body,
and inner pulsator shown in FIG. 1;
FIG. 3A is a side view of the outer pulsator in FIG. 2;
FIG. 3B is a side view of the rotating body in FIG. 2;
FIG. 3C is a side view of the inner pulsator in FIG. 2;
FIG. 4 is a sectional view illustrating a coupled state of the outer pulsator, rotating body, and inner pulsator;
FIG. 5 is an exploded perspective view illustrating an outer pulsator, rotating body,
and inner pulsator according to another embodiment of the present invention;
FIG. 6A is a side view of the outer pulsator in FIG. 5;
FIG. 6B is a side view of the rotating body in FIG. 5;
FIG. 6C is a side view of the inner pulsator in FIG. 5; and
FIG. 7 is a sectional view illustrating a coupled state of the outer pulsator, rotating body, and inner pulsator of the embodiment of the present invention.

### DETAILED DESCRIPTION OF EMBODIMENTS

Reference will now be made in detail to the embodiments of the present invention, examples of which are illustrated in the accompanying drawings, wherein like reference numerals refer to like elements throughout.

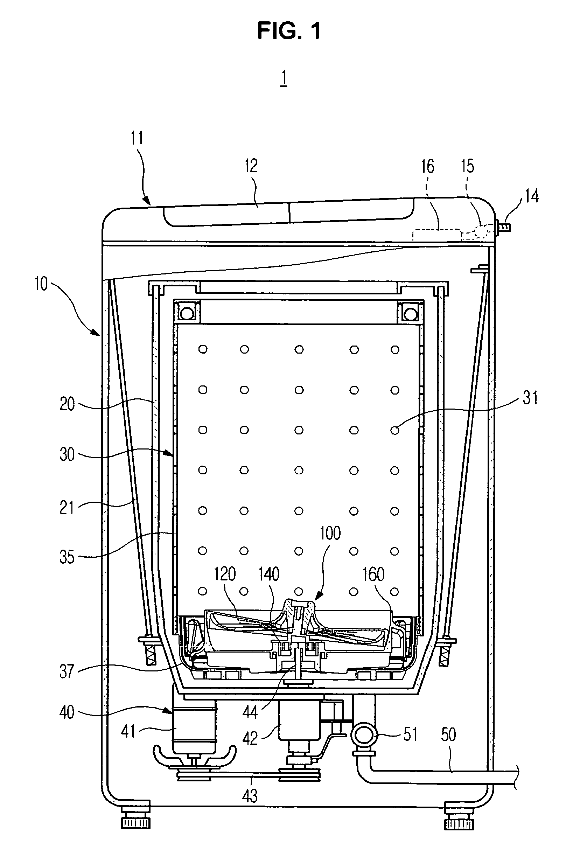

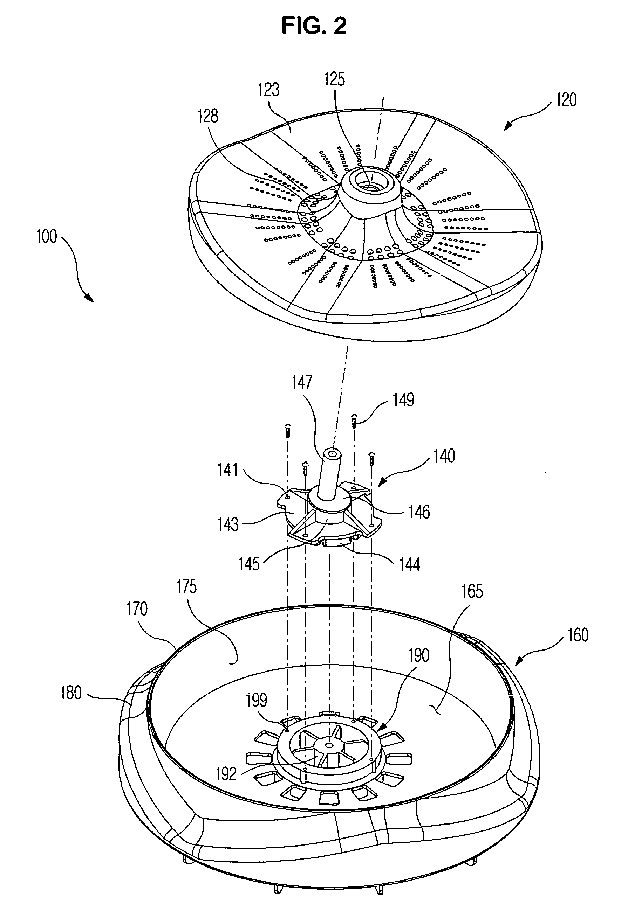

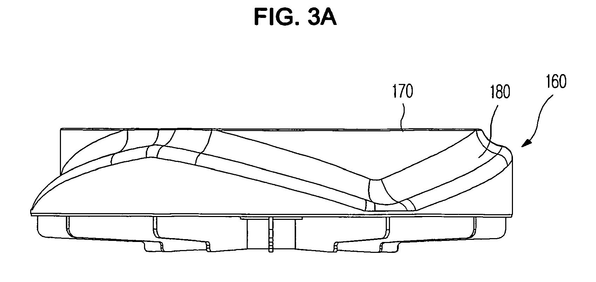

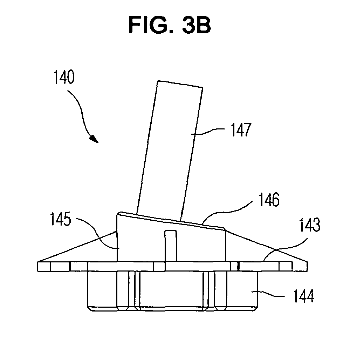

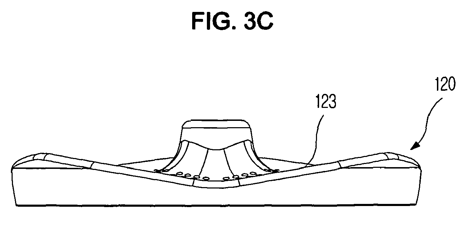

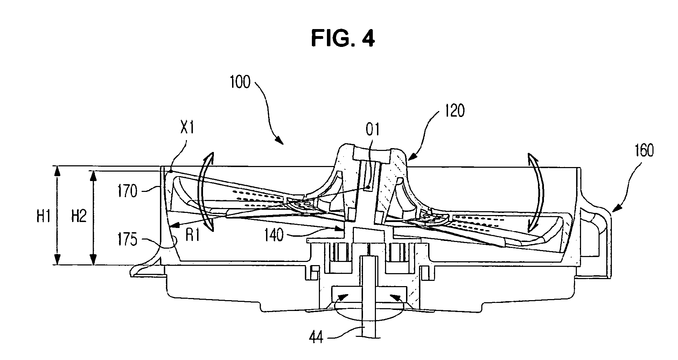

FIG. 1 is a longitudinal sectional view illustrating a configuration of a washing machine according to an embodiment of the present invention, FIG. 2 is an exploded perspective view illustrating an outer pulsator, rotating body, and inner pulsator shown in FIG. 1, FIG. 3A is a side view of the outer pulsator in FIG. 2, FIG. 3B is a side view of the rotating body in FIG. 2, FIG. 3C is a side view of the inner pulsator in FIG. 2, and FIG. 4 is a sectional view illustrating a coupled state of the outer pulsator, rotating body, and inner pulsator.

The washing machine 1 according to the embodiment of the present invention, as shown in FIG. 1, includes a housing 10 defining an external appearance of the washing machine, a washtub 20 in which wash water is stored, the washtub 20 being suspended in the housing 10, a rotating tub 30 rotatably disposed in the washtub 20 and having a pulsator unit 100 mounted therein to generate wash water streams, and a drive device 40 to drive the rotating tub 30 and pulsator unit 100.

The housing 10 takes the form of a rectangular box having an open upper side, and an upper cover 11 having a lid 12 is coupled to the open upper side. The upper cover 11 is provided for entrance/exit of laundry. A control panel (not shown) is located at a front region of the upper cover 11 and includes a display and operating buttons. Arranged in a rear region of the upper cover 11 are a water supply pipe 14 connected to a water tap (not shown), a water supply valve 15 to control the supply of water through the water supply pipe 14, and a detergent input device 16 in which detergent is temporarily stored.

The washtub 20 is suspended in the housing 10 via suspension devices 21. The drive device 40 is mounted to the bottom of the washtub 20. The drive device 40 includes a motor 41 and a clutch 42. To deliver power generated from the motor 41 to the clutch 42, the motor 41 and clutch 42 are connected to each other by a belt 43. The clutch 42 is located at the center of the bottom of the washtub 20 and is adapted to deliver power to the rotating tub 30 and/or the pulsator unit 100 as necessary. A rotating shaft 44 of the clutch 42 is coupled with both the rotating tub 30 and pulsator unit 100. With this arrangement, the clutch 42 functions to deliver power only to the pulsator unit 100 during washing and rinsing strokes and to rotate the pulsator unit 100 and rotating tub 30 simultaneously in a given direction during a dehydrating stroke. A drain hose 50 having a drain valve 51 is located below the washtub 20 and is used to discharge wash water out of the housing 10.

The rotating tub 30 includes a cylindrical rotating drum 35 perforated with a plurality of dehydrating holes 31, and a basket-bowl 37 coupled to a lower end of the rotating drum 35. The pulsator unit 100 is received in the basket-bowl 37. The rotating tub 30 is spaced apart from an inner wall surface of the washtub 20 by a constant distance.

Now, the pulsator unit 100 will be described in detail with reference to FIGS. 2 to 4.

The pulsator unit 100 includes an outer pulsator 160 coupled to the drive device 40 and rotated thereby, an inner pulsator 120 received in the outer pulsator 160, and a rotating body 140 interposed between the outer pulsator 160 and the inner pulsator 120.

As shown in FIGS. 2 and 3A, the outer pulsator 160 includes an inner wall 170, a toothed portion 180 formed at the exterior thereof on the boundary of the inner wall 170, and a cylindrical receiving region 165 defined as a space inside the inner wall 170, in which the inner pulsator 120 may be received. A coupler 190 to couple the rotating body 140 is mounted at the center of the receiving region 165.

The inner wall 170 of the outer pulsator 160 serves as a boundary between the outer pulsator 160 and the inner pulsator 120 received in the outer pulsator 160. The inner wall 170 is shaped to have a curved surface 175 corresponding to vertical movement of the inner pulsator 120. As compared to an apex X1 of an upper surface of the inner pulsator 120 being moved vertically, a height H1 of the inner wall 170 is at least equal to or higher than the apex X1. This configuration of the inner wall 170 is designed to substantially prevent laundry from becoming lodged between the inner pulsator 120 and the outer pulsator 160. This will be described in more detail hereinafter.

The toothed portion 180 formed at the exterior of the outer pulsator 160 functions to facilitate generation of a rotating water stream. The toothed portion 180 surrounds an outer periphery of the inner wall 170 of the outer pulsator 160 and has a constant thickness. The toothed portion is shaped as an upwardly and downwardly flowing curve.

The above-described toothed portion 180 easily generates a rotating water stream based on the toothlike shape thereof when the outer pulsator 160 is rotated.

The coupler 190 of the outer pulsator 160 has coupling holes 192 and fastening holes 199 coupling the rotating body 140. The coupling holes 192 have a shape corresponding to projections 144 of the rotating body 140, allowing the projections 144 to be fitted thereto respectively. The fastening holes 199 are shaped to allow bolts 149 having passed through bolt holes 141 of the rotating body 140 to be fastened therethrough. In this way, the rotating body 140 is fixedly coupled to the outer pulsator 160.

As shown in FIGS. 2 and 3B, the rotating body 140 includes a coupling part 143 fixedly coupled to the outer pulsator 160, an inclined part 145 integrally formed with the coupling part 143 and having an upper inclined surface 146, and a tilted rotating shaft 147 protruding orthogonally relative to the inclined surface 146.

The coupling part 143 is fixedly coupled to the outer pulsator 160 and thus, is rotated together with the outer pulsator 160. The inclined part 145 extends upward from the coupling part 143, a tip end of which is formed with the inclined surface 146. The inclined surface 146 serves to support a lower surface of the inner pulsator 120 and to guide vertical movement of the inner pulsator 120 as the inclined surface 146 is rotated. The tilted rotating shaft 147 protrudes orthogonally relative to the inclined surface 146 and is fitted into a hollow 125 of the inner pulsator 120. Although the inner pulsator 120 is fitted on the tilted rotating shaft 147, the inner pulsator 120 is not constrained by rotation of the tilted rotating shaft 147. That is, even if the tilted rotating shaft 147 is rotated, it does not induce rotation of the inner pulsator 120 and causes only idling of the inner pulsator 120. Thus, the inner pulsator 120 is only vertically moved based on rotation of the inclined surface 146, without rotation thereof.

In this way, the rotating body 140 serves as a converter to convert rotation of the outer pulsator 160 into vertical movement of the inner pulsator 120.

As shown in FIGS. 2 and 3C, the inner pulsator 120 is vertically movably coupled to an upper portion of the rotating body 140 and centrally defines the hollow 125 therein. A plurality of wash water holes 128 is perforated in the inner pulsator 120 to allow wash water to pass through the inner pulsator 120. The wash water holes 128 are spread throughout an upper surface of the inner pulsator 120. The upper surface of the inner pulsator 120 is also repeatedly formed with ripples 123 to facilitate generation of a vertical water stream when the inner pulsator 120 is vertically moved.

Referring to FIG. 4 illustrating the coupled state of the outer pulsator 160, rotating body 140 and inner pulsator 120 in cross section, the inner wall 170 of the outer pulsator 160 has the curved surface 175 of a constant radius of curvature R1. This configuration is chosen in consideration of vertical movement of the inner pulsator 120 and allows the inner wall 170 of the outer pulsator 160 to come into close contact with an outer end of the inner pulsator 120.

Specifically, the inner pulsator 120 is vertically moved as the inclined surface 146 of the rotating body 140 is rotated. The vertical movement draws an arc path on the basis of a center point 01 of the inner pulsator 120 and, a radius of the arc path is a distance from the center point 01 to the outer end of the inner pulsator 120. As a result of providing the inner wall 170 of the outer pulsator 160 with the curved surface 175 corresponding to the arc path of the inner pulsator 120, the inner pulsator 120 is allowed to come into close contact with the inner wall 170 of the outer pulsator 160, substantially preventing laundry from becoming lodged.

It is noted that the vertical movement of the inner pulsator 120 may require a certain clearance between the inner pulsator 120 and the inner wall 170 of the outer pulsator 160. For this reason, there is provided a tolerance of about 0.5mm (not shown) between the curved surface 175 of the inner wall 170 and the outer end of the inner pulsator 120. With the presence of the tolerance, the radius of curvature R1 of the inner wall 170 may be slightly greater than the distance from the center point 01 of the vertical movement to the outer end of the inner pulsator 120.

The height H1 of the inner wall 170 of the outer pulsator 160 is equal to or greater than a height H2 of the apex X1 of the upper surface of the inner pulsator 120 being moved vertically. This serves to prevent laundry from becoming lodged between the inner pulsator 120 and the outer pulsator 160 during the vertical movement of the inner pulsator 120.

Hereinafter, an operation of the washing machine 1 according to the embodiment of the present will be described.

If a user inputs a command using the operating buttons of the control panel after laundry is put into the washing machine 1 through the opened upper cover 11, the motor 41 is rotated, causing the rotating shaft 44 to be rotated by rotation power transmitted from the motor 41.

The outer pulsator 160 coupled to the rotating shaft 44 is rotated and simultaneously, the rotating body 140 fixedly coupled to the outer pulsator 160 is rotated together with the outer pulsator 160. In this case, the inner pulsator 120 is vertically moved based on rotation of the inclined surface 146 of the rotating body 140 rather than being constrained by rotation of the tilted rotating shaft 147 of the rotating body 140. In this way, the outer pulsator 160 acts to generate a rotating water stream by rotation thereof, and the inner pulsator 120 acts to generate a vertical water stream by vertical movement thereof.

Accordingly, the rotating and vertical water streams may be realized via the simple configuration as described above. Once the rotating and vertical water streams are generated, laundry may be washed even using a small amount of wash water, and this may achieve significant reduction in load to be applied to the motor 41.

Moreover, since the inner pulsator 120 comes into close contact with the inner wall 170 of the outer pulsator 160 due to the radius of curvature R1 of the curved surface 175, there is less possibility of laundry becoming lodged between the inner pulsator 120 and the outer pulsator 160 during washing even if laundry in the rotating tub 30 undergoes serious fluctuation.

The possibility of laundry becoming lodged between the inner pulsator 120 and the outer pulsator 160 due to the water streams is further lowered because the height H1 of the inner wall 170 of the outer pulsator 160 is equal to or greater than the height H2 of the apex X1 of the upper surface of the inner pulsator 120.

Hereinafter, another embodiment of the present invention will be described with reference to the accompanying drawings. A description of the same parts as those of the previously described embodiment will be omitted and the following description is based on differences therebetween.

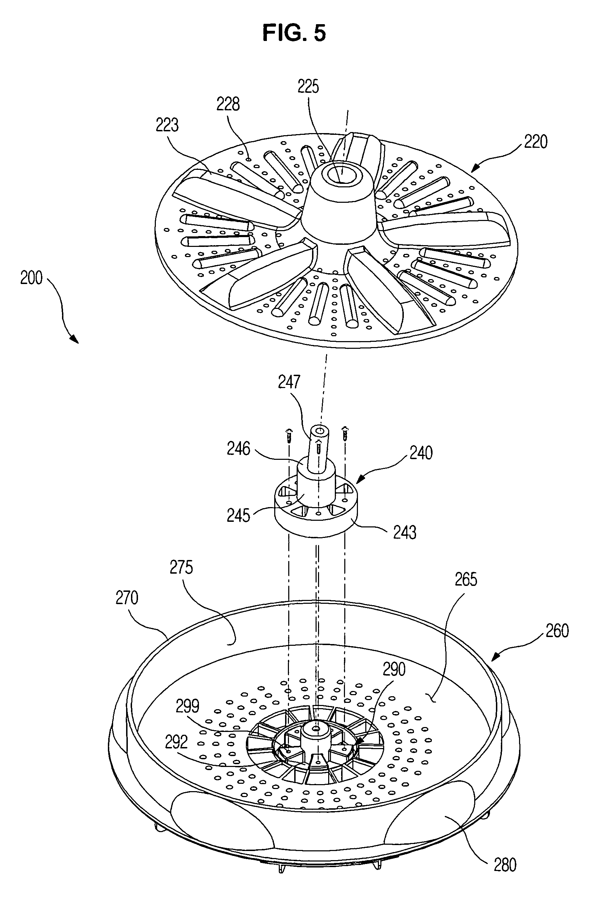

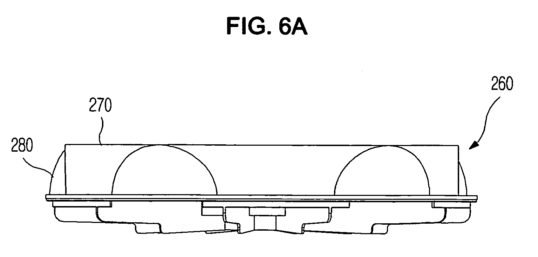

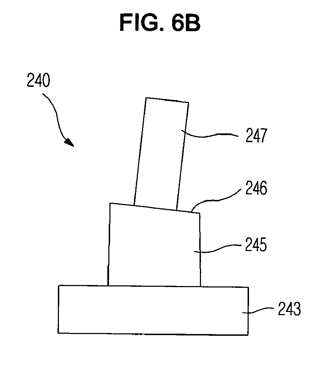

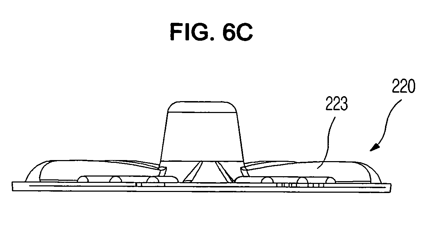

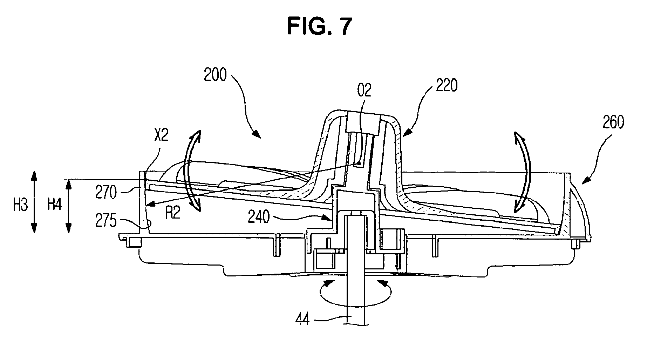

FIG. 5 is an exploded perspective view illustrating an outer pulsator, rotating body, and inner pulsator according to another embodiment of the present invention, FIG. 6A is a side view of the outer pulsator in FIG. 5, FIG. 6B is a side view of the rotating body in FIG. 5, FIG. 6C is a side view of the inner pulsator in FIG. 5, and FIG. 7 is a sectional view illustrating a coupled state of the outer pulsator, rotating body, and inner pulsator.

Most configurations of the washing machine according to the present embodiment are identical to those of the washing machine 1 shown in FIG. 1, with the exception that a pulsator unit 200 slightly differs from the pulsator unit 100 of the previously described embodiment.

The pulsator unit 200 includes an outer pulsator 260 coupled to the drive device 40 and rotated thereby, an inner pulsator 220 received in the outer pulsator 260, and a rotating body 240 interposed between the outer pulsator 260 and the inner pulsator 220.

As shown in FIGS. 5 and 6A, similar to the outer pulsator 160 of the previously described embodiment, the outer pulsator 260 includes an inner wall 270, embossed portions 280 repeatedly formed at the exterior thereof on the boundary of the inner wall 270, and a cylindrical receiving region 265 defined as a space inside the inner wall 270 in which the inner pulsator 220 may be received. A coupler 290 coupling the rotating body 240 is mounted at the center of the receiving region 265.

The inner wall 270 of the outer pulsator 260 is externally formed with the embossed portions 280 instead of the toothed portion 180. Similar to the toothed portion 180, the embossed portions 280 function to facilitate generation of a rotating water stream during rotation of the outer pulsator 260. That is, the embossed portions 280 are obtained by modifying the toothed portion 180 into another shape suitable to facilitate generation of a rotating water stream.

Although the shapes of coupling holes 292 and fastening holes 299 of the coupler 290 differ slightly from those of the previously described embodiment, they serve the same purpose, and other parts of the outer pulsator 260 according to the present embodiment are identical to those of the outer pulsator 160 of the previously described embodiment.

As shown in FIGS. 5 and 6B, similar to the rotating body 140 of the previously described embodiment, the rotating body 240 includes a coupling part 243 fixedly coupled to the outer pulsator 260, an inclined part 245 integrally formed with the coupling part 243 and having an upper inclined surface 246, and a tilted rotating shaft 247 protruding orthogonally relative to the inclined surface 246.

Although detailed shapes of the coupling part 243 and inclined part 245 slightly differ from the previously described embodiment, they serve the same purpose, and other parts of the rotating body 240 according to the present embodiment are identical to those of the rotating body 14 of the previously described embodiment.

As shown in FIGS. 5 and 6C, similar to the inner pulsator 120 of the previously described embodiment, the inner pulsator 220 is vertically movably coupled to an upper portion of the rotating body 240 and centrally defines a hollow 225 therein. A plurality of wash water holes 228 is perforated in the inner pulsator 220 to allow wash water to pass through the inner pulsator 220. The wash water holes 228 are spread throughout an upper surface of the inner pulsator 220. Unlike the previously described embodiment, the upper surface of the inner pulsator 220 is flat and raised water stream generators 223 are arranged on the upper surface of the inner pulsator 220 at constant intervals. The water stream generators 223 correspond to the ripples 123 on the upper surface of the inner pulsator 120 according to the previously described embodiment and thus, function to facilitate generation of a vertical water stream during vertical movement of the inner pulsator 220.

Other parts of the inner pulsator 220 according to the present embodiment are identical to those of the inner pulsator 120 of the previously described embodiment.

An operation of the washing machine according to the present embodiment is identical to the operation of the washing machine 1 according to the previously described embodiment.

Likewise, the outer pulsator 260 acts to generate a rotating water stream by rotation thereof, and the inner pulsator 220 acts to generate a vertical water stream by vertical movement thereof.

Also, likewise, since the inner pulsator 220 comes into close contact with the inner wall 270 of the outer pulsator 260 due to a radius of curvature R2 of a curved surface 275 of the inner wall 270, there is less possibility of laundry becoming lodged between the inner pulsator 220 and the outer pulsator 260 during washing even if laundry in the rotating tub 30 undergoes serious fluctuation. The possibility of laundry becoming lodged between the inner pulsator 220 and the outer pulsator 260 due to the water streams is further lowered because a height H3 of the inner wall 270 of the outer pulsator 260 is equal to or greater than a height H4 of an apex X2 of the upper surface of the inner pulsator 220. Reference numeral 02 refers to the center point of the inner pulsator 220.

In the above-described embodiments, the shapes of the toothed portion 180 and embossed portions 280 formed at the exteriors of the inner walls 170 and 270 of the outer pulsators 160 and 260 may be changed in various ways as long as they assure easy generation of a rotating water stream.

Further, in the above-described embodiments, the ripples 123 or the water stream generators 223 formed on the upper surfaces of the inner pulsators 120 and 220 may be changed in various ways as long as they assure easy generation of a vertical water stream.

As is apparent from the above description, a washing machine according to the embodiment of the present invention includes an outer pulsator to be rotated and an inner pulsator to be vertically moved. With this configuration, it may be possible to generate rotating and vertical water streams simultaneously.

The rotating and vertical water streams, moreover, may be realized via the simplified configuration.

Further, as a result of providing an inner wall of the outer pulsator with a curved surface and a higher height, it may be possible to prevent laundry from becoming lodged between the outer pulsator and the inner pulsator.

Furthermore, the vertical water stream may reduce the amount of water required to wash laundry and also, may reduce load to be applied to a motor.

Although a few preferred embodiments have been shown and described, it will be appreciated by those skilled in the art that various changes and modifications might be made without departing from the scope of the invention, as defined in the appended claims.

## Claims

1. A pulsator unit (100) for a washing machine (1), wherein the pulsator unit (100) is used to generate wash water streams, the pulsator unit (100) comprising:
an outer pulsator (160) to perform rotation;
a rotating body (140) coupled to the outer pulsator (160) to perform rotation; and
an inner pulsator (120) being received in a receiving region (165) of the outer pulsator (160),
wherein the inner pulsator (120) is coupled to the rotating body (140) and is moved so that the inner pulsator (120) moves vertically by rotation of the rotating body (140); **characterised in that**: the inner pulsator (120) is moved to draw an arc path on the basis of a center point (01) of the inner pulsator (120), wherein:
the rotating body (140) includes an inclined part (145) having an upper inclined surface (146) and a tilted rotating shaft (147) protruding orthogonally relative to the inclined surface (146); and
the inner pulsator (120) is coupled to the tilted rotating shaft (147) so as not to be rotated by rotation of the tilted rotating shaft (147), the inner pulsator (120) being moved vertically by rotation of the tilted rotating shaft (147) and the inclined part (145).

2. The pulsator unit according to claim 1, wherein an inner wall (170) of the outer pulsator (160) includes a curved surface (175) shaped to come into close contact with the inner pulsator (120) corresponding to vertical movement of the inner pulsator (120), to prevent laundry from becoming lodged between the outer pulsator (160) and the inner pulsator (120).

3. The pulsator unit according to claim 2, wherein a height (H1) of the inner wall (170) of the outer pulsator (160) is equal to or greater than a height of an upper surface apex (X1) of the inner pulsator (120) being moved vertically.

4. The pulsator unit according to claim 2, wherein the curved surface has a radius of curvature (R1) greater than a distance from a center point (O1) of the vertical movement of the inner pulsator (120) to an outer end of the inner pulsator (120).

5. The pulsator unit according to claim 1, wherein the outer pulsator (160) includes a toothed portion (180) to generate a rotating water stream.

6. The pulsator unit according to claim 1, wherein the outer pulsator (160, 260) includes an embossed portion (280) to generate a rotating water stream.

7. The pulsator unit according to claim 1, wherein the rotating body (140) further includes a coupling part (143) integrally formed at a bottom of the inclined part (145), the coupling part (143) being fixedly coupled to the outer pulsator (160).

8. The pulsator unit according to claim 1, wherein the pulsator unit (100) is arranged to be received in a basket-bowl (37) of the washing machine (1).

9. A washing machine (1) comprising:
a housing (10) defining an external appearance of the washing machine;
a rotating tub (30) rotatably installed in the housing (10); and a pulsator unit according to claim 1
installed in a lower region of the rotating tub (30).

10. The washing machine according to claim 9, wherein the rotating body (140) is fixedly coupled to the outer pulsator (160).

11. The washing machine according to claim 10, wherein:
the rotating body (140) further includes a coupling part (143) fixedly coupled to the outer pulsator (160).

12. The washing machine according to claim 9, wherein an inner wall (170) of the outer pulsator (160) includes a curved surface (175) shaped to come into close contact with the inner pulsator (120) corresponding to the vertical movement of the inner pulsator (120), to prevent laundry from becoming lodged between the outer pulsator (160) and the inner pulsator (120).

13. The washing machine according to claim 12, wherein a height (H1) of the inner wall (170) of the outer pulsator (160) is equal to or greater than a height of an upper surface apex (X1) of the inner pulsator (120) that has moved vertically.

## Patentansprüche

1. Pulsatoreinheit (100) für eine Waschmaschine (1), wobei die Pulsatoreinheit (100) verwendet wird, um Waschwasserströme zu erzeugen, wobei die Pulsatoreinheit (100) Folgendes aufweist:
einen äußeren Pulsator (160), um eine Drehung durchzuführen;
einen drehenden Körper (140), der mit dem äußeren Pulsator (160) gekoppelt ist, um eine Drehung durchzuführen; und
einen inneren Pulsator (120), der in einem Aufnahmebereich (165) des äußeren Pulsators (160) aufgenommen wird,
wobei der innere Pulsator (120) mit dem drehenden Körper (140) gekoppelt ist und so bewegt wird, dass der innere Pulsator (120) sich durch die Drehung des drehenden Körpers (140) senkrecht bewegt, **dadurch gekennzeichnet, dass** der innere Pulsator (120) bewegt wird, um auf der Basis eines Mittelpunkts (01) des inneren Pulsators (120) eine Bogenbahn zu ziehen, wobei:
der drehende Körper (140) einen geneigten Teil (145), der eine obere geneigte Fläche (146) hat, und eine gekippte Drehwelle (147) enthält, die bezüglich der geneigten Fläche (146) orthogonal vorsteht; und
der innere Pulsator (120) so mit der gekippten Drehwelle (147) gekoppelt ist, dass er nicht durch die Drehung der gekippten Drehwelle (147) gedreht wird, wobei der innere Pulsator (120) durch die Drehung der gekippten Drehwelle (147) und des geneigten Teils (145) senkrecht bewegt wird.

2. Pulsatoreinheit nach Anspruch 1, wobei eine Innenwand (170) des äußeren Pulsators (160) eine gekrümmte Fläche (175) enthält, die geformt ist, um entsprechend der senkrechten Bewegung des inneren Pulsators (120) mit dem inneren Pulsator (120) in engen Kontakt zu kommen, um zu verhindern, dass Wäsche zwischen dem äußeren Pulsator (160) und dem inneren Pulsator (120) zum Liegen kommt.

3. Pulsatoreinheit nach Anspruch 2, wobei eine Höhe (H1) der Innenwand (170) des äußeren Pulsators (160) gleich einer oder größer als eine Höhe eines oberen Flächenscheitels (X1) des senkrecht bewegten inneren Pulsators (120) ist.

4. Pulsatoreinheit nach Anspruch 2, wobei die gekrümmte Fläche einen Krümmungsradius (R1) größer als ein Abstand von einem Mittelpunkt (01) der senkrechten Bewegung des inneren Pulsators (120) zu einem äußeren Ende des inneren Pulsators (120) hat.

5. Pulsatoreinheit nach Anspruch 1, wobei der äußere Pulsator (160) einen gezahnten Abschnitt (180) enthält, um einen drehenden Wasserstrom zu erzeugen.

6. Pulsatoreinheit nach Anspruch 1, wobei der äußere Pulsator (160, 260) einen gewölbten Abschnitt (280) enthält, um einen drehenden Wasserstrom zu erzeugen.

7. Pulsatoreinheit nach Anspruch 1, wobei der drehende Körper (140) weiter ein Kopplungsteil (143) enthält, das integral am Boden des geneigten Teils (145) geformt ist, wobei das Kopplungsteil (143) fest mit dem äußeren Pulsator (160) gekoppelt ist.

8. Pulsatoreinheit nach Anspruch 1, wobei die Pulsatoreinheit (100) eingerichtet ist, um in einem Korb/einer Schale (37) der Waschmaschine (1) aufgenommen zu werden.

9. Waschmaschine (1), die aufweist:
ein Gehäuse (10), das ein äußeres Aussehen der Waschmaschine definiert;
einen drehenden Bottich (30), der drehbar im Gehäuse (10) installiert ist;
und eine Pulsatoreinheit nach Anspruch 1, die in einem unteren Bereich des drehenden Bottichs (30) installiert ist.

10. Waschmaschine nach Anspruch 9, wobei der drehende Körper (140) fest mit dem äußeren Pulsator (160) gekoppelt ist.

11. Waschmaschine nach Anspruch 10, wobei:
der drehende Körper (140) weiter ein Kopplungsteil (143) enthält, das fest mit dem äußeren Pulsator (160) gekoppelt ist.

12. Waschmaschine nach Anspruch 9, wobei eine Innenwand (170) des äußeren Pulsators (160) eine gekrümmte Fläche (175) enthält, die geformt ist, um mit dem inneren Pulsator (120) entsprechend der senkrechten Bewegung des inneren Pulsators (120) in engen Kontakt zu kommen, um zu verhindern, dass Wäsche zwischen dem äußeren Pulsator (160) und dem inneren Pulsator (120) zu liegen kommt.

13. Waschmaschine nach Anspruch 12, wobei eine Höhe (H1) der Innenwand (170) des äußeren Pulsators (160) gleich einer oder größer als eine Höhe eines oberen Flächenscheitels (X1) des inneren Pulsators (120) ist, der sich senkrecht bewegt hat.

## Revendications

1. Unité de pulsateur (100) pour une machine à laver (1), dans laquelle l'unité de pulsateur (100) est utilisée pour générer des jets d'eau de lavage, l'unité de pulsateur (100) comprenant :
un pulsateur externe (160) pour effectuer une rotation ;
un corps rotatif (140) accouplé au pulsateur externe (160) pour effectuer la rotation ; et
un pulsateur interne (120) reçu dans une région de réception (165) du pulsateur externe (160),
le pulsateur interne (120) étant accouplé au corps rotatif (140) et étant déplacé de telle sorte que le pulsateur interne (120) se déplace verticalement par rotation du corps rotatif (140),
**caractérisée en ce que** le pulsateur interne (120) est déplacé de manière à dessiner un chemin arqué sur la base d'un centre (01) du pulsateur interne (120),
le corps rotatif (140) comportant une partie inclinée (145) ayant une surface inclinée supérieure (146) et un arbre rotatif incliné (147) saillant perpendiculairement par rapport à la surface inclinée (146) ; et
le pulsateur interne (120) étant accouplé à l'arbre rotatif incliné (147) de manière à ne pas être tourné par la rotation de l'arbre rotatif incliné (147), le pulsateur interne (120) étant déplacé verticalement par la rotation de l'arbre rotatif incliné (147) et de la partie inclinée (145).

2. Unité de pulsateur selon la revendication 1, dans laquelle une paroi interne (170) du pulsateur externe (160) comporte une surface incurvée (175) formée de manière à venir en contact étroit avec le pulsateur interne (120) de manière correspondant au mouvement vertical du pulsateur interne (120), pour empêcher que du linge ne se coince entre le pulsateur externe (160) et le pulsateur interne (120).

3. Unité de pulsateur selon la revendication 2, dans laquelle une hauteur (H1) de la paroi interne (170) du pulsateur externe (160) est supérieure ou égale à une hauteur d'un sommet d'une surface supérieure (X1) du pulsateur interne (120) qui est déplacé verticalement.

4. Unité de pulsateur selon la revendication 2, dans laquelle la surface incurvée a un rayon de courbure (R1) supérieur à une distance allant d'un centre (O1) du mouvement vertical du pulsateur interne (120) à une extrémité externe du pulsateur interne (120).

5. Unité de pulsateur selon la revendication 1, dans laquelle le pulsateur externe (160) comporte une portion dentée (180) pour générer un jet d'eau rotatif.

6. Unité de pulsateur selon la revendication 1, dans laquelle le pulsateur externe (160, 260) comporte une portion en relief (280) pour générer un jet d'eau rotatif.

7. Unité de pulsateur selon la revendication 1, dans laquelle le corps rotatif (140) comporte en outre une partie d'accouplement (143) formée intégralement au niveau d'un fond de la partie inclinée (145), la partie d'accouplement (143) étant accouplée fixement au pulsateur externe (160).

8. Unité de pulsateur selon la revendication 1, dans laquelle l'unité de pulsateur (100) est agencée de manière à être reçue dans un bol-panier (37) de la machine à laver (1).

9. Machine à laver (1) comprenant :
un boîtier (10) définissant un aspect extérieur de la machine à laver ;
un bac rotatif (30) installé à rotation dans le boîtier (10) ;
et une unité de pulsateur selon la revendication 1 installée dans une région inférieure du bac rotatif (30).

10. Machine à laver selon la revendication 9, dans laquelle le corps rotatif (140) est accouplé fixement au pulsateur externe (160).

11. Machine à laver selon la revendication 10, dans laquelle :
le corps rotatif (140) comporte en outre une partie d'accouplement (143) accouplée fixement au pulsateur externe (160).

12. Machine à laver selon la revendication 9, dans laquelle une paroi interne (170) du pulsateur externe (160) comporte une surface incurvée (175) formée de manière à venir en contact étroit avec le pulsateur interne (120) de manière correspondant au mouvement vertical du pulsateur interne (120), pour empêcher que du linge ne se coince entre le pulsateur externe (160) et le pulsateur interne (120).

13. Machine à laver selon la revendication 12, dans laquelle une hauteur (H1) de la paroi interne (170) du pulsateur externe (160) est supérieure ou égale à une hauteur d'un sommet d'une surface supérieure (X1) du pulsateur interne (120) qui a été déplacé verticalement.
